# EUROPEAN PATENT APPLICATION

(11) **EP 3 778 728 A1**
(43) Date of publication of application: **17.02.2021**
(21) Application number: 19777938.2
(22) Date of filing: 28.03.2019
(51) Int. Cl.: C08J 5/18, B65D 65/46, C08K 5/053, C08L 29/04

(54) **WATER-SOLUBLE FILM, PRODUCTION METHOD THEREOF, AND CHEMICAL AGENT PACKAGE**

(30) Priority: 29.03.2018 JP 2018066011
(71) Applicant: Mitsubishi Chemical Corporation, Chiyoda-ku Tokyo 100-8251 (JP)
(72) Inventor: ICHIKI Toshiya, Tokyo 100-8251 (JP)
(74) Representative: Kuhnen & Wacker Patent- und Rechtsanwaltsbüro PartG mbB
(86) International application number: PCT/JP2019/013856
(87) International publication number: WO 2019/189684

(57) **Abstract**

A highly transparent water-soluble film is provided. The water-soluble film contains a PVA resin as a major component, and has not more than 50 dark defects each having a diameter of 1 to 5 mm per a 5 cm × 5 cm area thereof as observed under crossed Nicols after being uniaxially stretched under the following conditions (α):
(α) a test piece cut out of the water-soluble film to a size having a length of 25 cm and a width of 13 cm is clamped with chucks spaced 11 cm from each other longitudinally of the test piece in a stretching machine, and is uniaxially stretched at a stretching rate of 3 mm/second to a stretch ratio of 1.2 at a temperature of 23°C at a humidity of 50%RH.

## Description

### TECHNICAL FIELD

The present disclosure relates to a water-soluble film containing a polyvinyl alcohol resin as a major component. More specifically, the present disclosure relates to a water-soluble film which has a higher film transparency and an excellent appearance and is usable for various packaging applications, and further relates to a water-soluble film production method and a chemical agent package.

### BACKGROUND ART

Polyvinyl alcohol films are formed from polyvinyl alcohol resins which are thermoplastic and yet water-soluble. The polyvinyl alcohol films are significantly different in various film physical properties and texture from hydrophobic films such as polyethylene terephthalate films and polyolefin films which are generally used as packaging films.

Conventionally, chemical agent portion packages (unit packages) have been proposed which each include a bag formed from a polyvinyl alcohol resin film and a chemical agent such as agricultural chemical or detergent contained in the bag, taking advantage of the water solubility of the polyvinyl alcohol resin. The unit packages are used in a wide variety of applications.

A known example of the polyvinyl alcohol resin film to be used for the water-soluble unit packages in such applications is a water-soluble film which contains 100 parts by weight of a polyvinyl alcohol, 5 to 30 parts by weight of a plasticizer, 1 to 10 parts by weight of starch, and 0.01 to 2 parts by weight of a surfactant (see, for example, PTL 1).

### RELATED ART DOCUMENT

### PATENT DOCUMENT

PTL 1: JP-A-2001-329130

### SUMMARY

The water-soluble film disclosed in PTL 1 has excellent water solubility, and is usable as a chemical agent package containing a liquid detergent or the like.

The water-soluble film disclosed in PTL 1 is excellent in water solubility, antiblocking property, and burst strength, but is insufficient in film transparency (optical property). In recent liquid detergent packaging applications, for example, an emphasis tends to be placed on a package design imparted with a luxury appearance by giving consideration to the color of the liquid detergent and the form of the package to enhance the commercial value. Therefore, the water-soluble film needs improvement in terms of film transparency.

In view of the foregoing, the present disclosure provides a water-soluble film having a higher film transparency, a water-soluble film production method, and a chemical agent package.

To solve the problem described above, the inventor investigated why the water-soluble film has a lower transparency. An aqueous solution of the polyvinyl alcohol resin to be used as a material for the water-soluble polyvinyl alcohol film generally contains an additive such as surfactant together with the polyvinyl alcohol resin. It is supposed that the polyvinyl alcohol resin partly interacts with the surfactant to form aggregates when the polyvinyl alcohol resin aqueous solution is prepared. Unlike abnormal fisheyes occurring due to unmelted parts of the polyvinyl alcohol resin, the aggregates thus formed by the polyvinyl alcohol resin and the surfactant do not influence the appearance of the film, as long as the film is visually inspected under ordinary conditions. However, the aggregates are slightly different in refractive index from the overall water-soluble film and, therefore, impair the transparency of the film as described above.

The inventor conducted intensive studies in view of the foregoing. In detailed investigation into the optical properties of the polyvinyl alcohol film, the inventor found that, where the polyvinyl alcohol film has not more than 50 dark defects (dark points) each having a diameter of 1 to 5 mm per a 5 cm × 5 cm area thereof as observed under crossed Nicols after being uniaxially stretched to a stretch ratio of 1.2, the aforementioned problem is solved.

According to a first aspect of the present disclosure, there is provided a water-soluble film which contains a polyvinyl alcohol resin (A) as a major component, and has not more than 50 dark defects each having a diameter of 1 to 5 mm per a 5 cm × 5 cm area thereof as observed under crossed Nicols after being uniaxially stretched under the following conditions (α):
(α) a test piece cut out of the water-soluble film to a size having a length of 25 cm and a width of 13 cm is clamped with chucks spaced 11 cm from each other longitudinally of the test piece in a stretching machine, and is uniaxially stretched at a stretching rate of 3 mm/second to a stretch ratio of 1.2 at a temperature of 23°C at a humidity of 50%RH.

According to a second aspect of the present disclosure, there is provided a method of producing the water-soluble film according to the first aspect, the method including the steps of: preparing a polyvinyl alcohol resin aqueous solution; subjecting the polyvinyl alcohol resin aqueous solution to a pressure and heat treatment at a pressure of 0.10 to 1.0 MPa at a temperature of not lower than 130°C at a humidity of not lower than 90%RH for not shorter than 1 hour; and casting and drying the polyvinyl alcohol resin aqueous solution subjected to the pressure and heat treatment.

According to a third aspect of the present disclosure, there is provided a chemical agent package including a package bag formed from the water-soluble film according to the first aspect, and a chemical agent packaged in the package bag.

The water-soluble film of the present disclosure contains the polyvinyl alcohol resin (A) as the major component, and has not more than 50 dark defects (dark points) each having a diameter of 1 to 5 mm per a 5 cm × 5 cm area thereof as observed under crossed Nicols after being uniaxially stretched to a stretch ratio of 1.2 under the aforementioned conditions (α). Therefore, the water-soluble film of the present disclosure has higher film transparency. Because of the transparency, the water-soluble film of the present disclosure is useful for a liquid-containing package such as a liquid detergent package, and a chemical agent package which require excellent appearance.

Particularly, where the water-soluble film further contains 5 to 100 parts by weight of a plasticizer (B) based on 100 parts by weight of the polyvinyl alcohol resin (A), a package produced by packaging a liquid such as a liquid detergent with the water-soluble film has an improved shape stability over time.

Where the plasticizer (B) is at least one selected from the group consisting of glycerin and sorbitol, the flexibility and other properties of the water-soluble film can be properly controlled.

Where the water-soluble film further contains 0.01 to 3 parts by weight of a surfactant (C) based on 100 parts by weight of the polyvinyl alcohol resin (A), the peelability of the water-soluble film with respect to a metal surface can be improved.

Where the surfactant (C) is a surfactant having a polyoxyalkylene structure, a film surface smoothing effect can be provided.

The water-soluble film of the present disclosure can be produced in a practical manner by the method including the steps of: preparing the polyvinyl alcohol resin aqueous solution; subjecting the polyvinyl alcohol resin aqueous solution to the pressure and heat treatment at a pressure of 0.10 to 1.0 MPa at a temperature of not lower than 130°C at a humidity of not lower than 90%RH for not shorter than 1 hour; and casting and drying the polyvinyl alcohol resin aqueous solution subjected to the pressure and heat treatment. The water-soluble film of the present disclosure thus produced has the specific effects described above.

### DESCRIPTION OF EMBODIMENTS

Embodiments of the present disclosure will hereinafter be described in detail. It should be understood that the present disclosure be not limited to these embodiments.

As described above, the water-soluble film of the present disclosure contains a polyvinyl alcohol resin (A) as a major component, and has not more than 50 dark defects each having a diameter of 1 to 5 mm per a 5 cm × 5 cm area thereof as observed under crossed Nicols after being uniaxially stretched under the following conditions (α):
(α) a test piece cut out of the water-soluble film to a size having a length of 25 cm and a width of 13 cm is clamped with chucks spaced 11 cm from each other longitudinally of the test piece in a stretching machine, and is uniaxially stretched at a stretching rate of 3 mm/second to a stretch ratio of 1.2 at a temperature of 23°C at a humidity of 50%RH. In the present disclosure, the term "major component" means a component that influences the fundamental properties of the water-soluble film and is present in a proportion of not less than 50 wt.%, preferably not less than 55 wt.%, particularly preferably not less than 60 wt.%, based on the overall weight of the water-soluble film, and means that the water-soluble film may be entirely made of the polyvinyl alcohol resin (A).

The polyvinyl alcohol is hereinafter often abbreviated as PVA, and the water-soluble film containing the polyvinyl alcohol resin as the major component is hereinafter often referred to as PVA water-soluble film.

The water-soluble film is uniaxially stretched under the above conditions (α) for the crossed Nicols observation as described above. This does not necessarily mean that the water-soluble film of the present disclosure is a uniaxially stretched product. The crossed Nicols observation means that the water-soluble film is inspected by a crossed Nicols method.

For example, a 5 cm × 5 cm square frame is marked with an oil-based marker pen (having a line width of 0.5 mm) on a center portion of the test piece cut out of the water-soluble film to a size having a length of 25 cm and a width of 13 cm as described above. Then, the test piece is clamped with the chucks spaced 11 cm from each other longitudinally of the test piece in the stretching machine, and is uniaxially stretched at a stretching rate of 3 mm/second to a stretch ratio of 1.2 at a temperature of 23°C at a humidity of 50%RH.

Subsequently, the uniaxially stretched test piece is placed between two polarizer plates disposed in crossed Nicols relation in a strain tester TRIBOGEAR TYPE:25W (available from Shinto Scientific Co., Ltd.) and, in this state, the crossed Nicols observation is performed with a backlight turned on. Then, film portions impairing the transparency of the water-soluble film appear as dark defects (dark spots) in the water-soluble film in the crossed Nicols observation. The dark defects (dark spots) observed within the aforementioned marked square frame are each circumscribed with a circle by using the oil-based marker pen (having a line width of 0.5 mm). The diameter of the circle is measured by means of a caliper for determination of whether or not the diameter falls within a range of 1 to 5 mm. Then, the number of dark defects each having a diameter of 1 to 5 mm in the 5 cm × 5 cm area is determined.

The water-soluble film of the present disclosure has a higher film transparency, because the number of dark defects each having a diameter of 1 to 5 mm in the test piece of the water-soluble film uniaxially stretched under the above conditions (α) is (zero to) not more than 50 per a 5 cm × 5 cm area of the uniaxially unstretched test piece as observed under crossed Nicols. The number of the dark defects is preferably not more than 10, particularly preferably not more than 3, more preferably zero.

Next, ingredients of the water-soluble film of the present disclosure will be described in detail,

### [PVA Resin (A)]

The PVA resin (A) to be used as an ingredient for the water-soluble film of the present disclosure may be an unmodified PVA or a modified PVA resin.

The PVA resin (A) preferably has an average saponification degree of not less than 80 mol %, particularly preferably 82 to 99.9 mol %, more preferably 85 to 99.8 mol %, especially preferably 90 to 99.5 mol %. If the average saponification degree of the PVA resin (A) is excessively low, the solubility of the film tends to be reduced over time depending on the pH of a chemical agent to be packaged with the film.

Where the unmodified PVA is used as the PVA resin (A), the unmodified PVA preferably has an average saponification degree of not less than 80 mol %, particularly preferably 82 to 99 mol %, more preferably 85 to 90 mol %. If the average saponification degree of the unmodified PVA is excessively low, the water solubility tends to be reduced. If the average saponification degree of the unmodified PVA is excessively high, the water solubility also tends to be reduced.

Where the modified PVA resin is used as the PVA resin (A), the modified PVA resin preferably has an average saponification degree of not less than 80 mol %, particularly preferably 85 to 99.9 mol %, more preferably 90 to 99.5 mol %.

Further, where an anionic group-modified PVA resin is used as the PVA resin (A), the anionic group-modified PVA resin preferably has an average saponification degree of not less than 85 mol %, particularly preferably 88 to 99.9 mol %, more preferably 90 to 99.5 mol %.

If the average saponification degree of the modified PVA resin is excessively low, the water solubility of the water-soluble film tends to be reduced over time depending on the pH of the chemical agent to be packaged with the film. If the average saponification degree of the modified PVA resin is excessively high, the water solubility of the water-soluble film tends to be significantly reduced due to thermal history experienced during film formation.

The polymerization degree of the PVA resin (A) is generally expressed by an aqueous solution viscosity. The PVA resin (A) preferably has a 4 wt.% aqueous solution viscosity of 5 to 50 mPa·s, particularly preferably 10 to 45 mPa·s, more preferably 15 to 40 mPa·s, as measured at 20°C.

Where the unmodified PVA is used as the PVA resin (A), the unmodified PVA preferably has a 4 wt.% aqueous solution viscosity of 5 to 50 mPa·s, particularly preferably 10 to 45 mPa·s, more preferably 15 to 40 mPa·s, as measured at 20°C.

Where the modified PVA resin is used as the PVA resin (A), the modified PVA resin preferably has a 4 wt.% aqueous solution viscosity of 5 to 50 mPa·s, particularly preferably 10 to 45 mPa·s, more preferably 15 to 40 mPa·s, as measured at 20°C.

If the viscosity of the PVA resin (A) is excessively low, the mechanical strength of the water-soluble film as a packaging material tends to be reduced. If the viscosity of the PVA resin (A) is excessively high, on the other hand, the productivity of the film tends to be reduced because of a higher aqueous solution viscosity during the film formation.

The average saponification degrees described above are measured in conformity with JIS K6726 3.5, and the 4 wt.% aqueous solution viscosities are measured in conformity with JIS K6726 3.11.2.

Examples of the modified PVA resin to be used in the present disclosure include anionic group-modified PVA resin, cationic group-modified PVA resin, and nonionic group-modified PVA resin. Particularly, the anionic group-modified PVA resin is preferably used from the viewpoint of the water solubility of the water-soluble film. Exemplary anionic groups for the anionic group-modified PVA resin include carboxyl group, sulfonic acid group, and phosphoric acid group. For chemical resistance and long-term stability, the carboxyl group and the sulfonic acid group are preferred, and the carboxyl group is particularly preferred.

In the present disclosure, the anionic group-modified PVA resin preferably has a modification degree of 1 to 10 mol %, particularly preferably 2 to 9 mol %, more preferably 2 to 8 mol %, especially preferably 3 to 7 mol %. If the modification degree of the anionic group-modified PVA resin is excessively low, the water solubility tends to be reduced. If the modification degree of the anionic group-modified PVA resin is excessively high, the productivity and the biodegradability of the PVA resin tend to be reduced. Further, the blocking is liable to occur, thereby reducing the practicality.

In the present disclosure, the unmodified PVA and the modified PVA resin may be each used alone as the PVA resin (A), or may be used in combination as the PVA resin (A). Further, two or more types of PVA resins having different saponification degrees, different viscosities, different modifying groups, and different modification degrees may be used in combination.

In the present disclosure, the PVA resin (A) preferably includes the modified PVA resin for the long-term water solubility of the film. Further, the PVA resin (A) preferably includes the anionic group-modified PVA resin, and particularly preferably includes the anionic group-modified PVA resin and the unmodified PVA.

The weight ratio of the modified PVA resin to the unmodified PVA (modified PVA resin/unmodified PVA) is preferably 95/5 to 60/40, particularly preferably 94/6 to 70/30, more preferably 93/7 to 80/20. If the ratio of the modified PVA resin is excessively low, the solubility tends to be reduced. If the weight ratio of the modified PVA resin is excessively high, the water sealability tends to be reduced.

Where the modified PVA resin and the unmodified PVA are used in combination, the unmodified PVA preferably has a 4 wt.% aqueous solution viscosity of 5 to 50 mPa·s, particularly preferably 8 to 45 mPa·s, more preferably 12 to 40 mPa·s, especially preferably 15 to 35 mPa·s, as measured at 20°C. If the viscosity of the unmodified PVA is excessively low, the mechanical strength of the water-soluble film as the packaging material tends to be reduced. If the viscosity of the unmodified PVA is excessively high, on the other hand, the aqueous solution viscosity tends to be higher during the film formation, thereby reducing the productivity of the film.

The unmodified PVA to be used in the present disclosure may be prepared by saponifying a vinyl ester polymer prepared by polymerization of a vinyl ester compound.

Examples of the vinyl ester compound include vinyl formate, vinyl acetate, vinyl trifluoroacetate, vinyl propionate, vinyl butyrate, vinyl caprate, vinyl laurate, vinyl versatate, vinyl palmitate, and vinyl stearate. Particularly, vinyl acetate is preferably used as the vinyl ester compound. The aforementioned vinyl ester compounds may be used alone or in combination.

The modified PVA resin to be used in the present disclosure may be prepared, for example, by copolymerizing the vinyl ester compound and an unsaturated monomer copolymerizable with the vinyl ester compound and then saponifying the resulting copolymer, or by post-modifying the unmodified PVA.

In the present disclosure, the copolymerizable unsaturated monomer may be copolymerized with the vinyl ester compound. For the preparation of the modified PVA resin, the unsaturated monomer to be copolymerized should contain a modifying group. Examples of the modifying group-containing unsaturated monomer copolymerizable with the vinyl ester compound include olefins such as ethylene, propylene, isobutylene, α-octene, α-dodecene, and α-octadecene; hydroxyl-containing α-olefins such as 3-buten-1-ol, 4-penten-1-ol, and 5-hexen-1-ol, and acylation products and other derivatives of these hydroxyl-containing α-olefins; unsaturated acids such as acrylic acid, methacrylic acid, crotonic acid, maleic acid, maleic anhydride, itaconic acid, and undecylenic acid, and salts, monoesters, and dialkyl esters of these unsaturated acids; amides such as diacetone acrylamide, acrylamide, and methacrylamide; and olefin sulfonic acids such as ethylenesulfonic acid, allylsulfonic acid, and methallylsulfonic acid, and salts of these olefin sulfonic acids, which may be used alone or in combination. The proportion of the copolymerizable unsaturated monomer is typically not greater than 10 mol % based on the total proportion of the vinyl ester compound and the copolymerizable unsaturated monomer.

The modified PVA resin has a primary hydroxyl group in its side chain, and the number of primary hydroxyl groups is typically 1 to 5, preferably 1 to 2, particularly preferably 1. Particularly, the modified PVA resin preferably has a secondary hydroxyl group in addition to the primary hydroxyl group. Examples of the modified PVA resin include a PVA resin having a 1,2-diol structural unit in its side chain, and a PVA resin having a hydroxyalkyl group in its side chain. The PVA resin having the 1,2-diol structural unit in its side chain may be prepared, for example, by: (i) a method in which a copolymer of vinyl acetate and 3,4-diacetoxy-1-butene is saponified; (ii) a method in which a copolymer of vinyl acetate and vinyl ethylene carbonate is saponified and decarbonated; (iii) a method in which a copolymer of vinyl acetate and 2,2-dialkyl-4-vinyl-1,3-dioxolane is saponified and deketalized; and (iv) a method in which a copolymer of vinyl acetate and glycerin monoallyl ether is saponified.

A known polymerization method such as solution polymerization method, emulsion polymerization method or suspension polymerization method may be used for the polymerization in the preparation of the PVA resin (A). A solution polymerization method using a lower alcohol such as methanol, ethanol or isopropyl alcohol as a solvent is typically employed. Where the modified PVA resin is prepared by the solution polymerization method, exemplary methods for feeding the unsaturated monomers include: a method including the steps of feeding the whole amount of the vinyl ester compound and a part of the unsaturated monomer to start the polymerization, and continuously or dividedly adding the rest of the unsaturated monomer during the polymerization; and a method including the step of simultaneously feeding the whole amounts of the unsaturated monomers for the polymerization.

A polymerization catalyst may be properly selected from known polymerization catalysts including azo catalysts such as azobisisobutyronitrile, and peroxide catalysts such as acetyl peroxide, benzoyl peroxide, and lauroyl peroxide according to the polymerization method. The polymerization reaction temperature may be selected from a range between about 50°C and the boiling point of the polymerization catalyst.

The resulting copolymer is dissolved in an alcohol, and saponified in the presence of a saponification catalyst. Examples of the alcohol include C1 to C5 alcohols such as methanol, ethanol, and butanol, which may be used alone or in combination. The concentration of the copolymer in the alcohol may be selected from a range between 20 and 50 wt.%.

Usable examples of the saponification catalyst include alkali catalysts including hydroxides and alcoholates of alkali metals such as sodium hydroxide, potassium hydroxide, sodium methylate, sodium ethylate, and potassium methylate, and acid catalysts. The saponification catalyst is preferably used in an amount of 1 to 100 mmol equivalents relative to the vinyl ester compound. These saponification catalysts may be used alone or in combination.

A carboxyl-modified PVA resin as the modified PVA resin, for example, may be prepared by any method. Examples of the preparation method include: (I) a method in which a carboxyl-containing unsaturated monomer and a vinyl ester compound are copolymerized and then the resulting copolymer is saponified; and (II) a method in which a vinyl ester compound is polymerized in the presence of a carboxyl-containing alcohol, aldehyde or thiol as a chain transfer agent and the resulting polymer is saponified.

Examples of the vinyl ester compound to be used in the method (I) or (II) include those described above, and vinyl acetate is preferably used.

Examples of the carboxyl-containing unsaturated monomer to be used in the method (I) include ethylenically unsaturated dicarboxylic acids (maleic acid, fumaric acid, itaconic acid, and the like), ethylenically unsaturated dicarboxylic acid monoesters (monoalkyl maleates, monoalkyl fumarates, monoalkyl itaconates, and the like), ethylenically unsaturated dicarboxylic acid diesters (dialkyl maleates, dialkyl fumarates, dialkyl itaconates, and the like) which need conversion to carboxyl groups by hydrolysis in the saponification of the copolymer, ethylenically unsaturated carboxylic anhydrides (maleic anhydride, itaconic anhydride, and the like), ethylenically unsaturated monocarboxylic acids ((meth)acrylic acid, crotonic acid, and the like), and salts of these compounds.

Of these, maleic acid, monoalkyl maleates, dialkyl maleates, maleic acid salts, maleic anhydride, itaconic acid, monoalkyl itaconates, dialkyl itaconates, (meth)acrylic acid, and the like are preferred, and maleic acid, monoalkyl maleates, dialkyl maleates, maleic acid salts, and maleic anhydride are particularly preferred. Further, monoalkyl maleates are more preferred, and monomethyl maleate is especially preferred. These may be used alone or in combination.

In the method (II), a compound derived from a thiol having a greater chain transfer effect is particularly effective, and examples of the thiol-derived compound include compounds represented by the following general formulae (1) to (3): 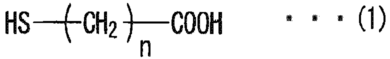 wherein n is an integer of 0 to 5. 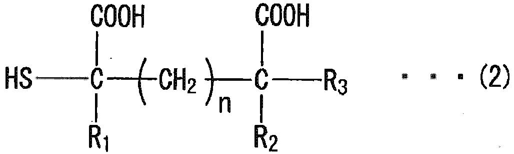 wherein n is an integer of 0 to 5, and R₁, R₂, and R₃ are each a hydrogen atom or a lower alkyl group (which may have a substituent). 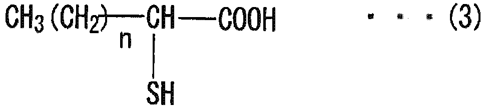 wherein n is an integer of 0 to 20.

Specific examples of the thiol-derived compound include mercaptoacetic acid salts, 2-mercaptopropionic acid salts, 3-mercaptopropionic acid salts, and 2-mercaptostearic acid salts, which may be used alone or in combination.

The preparation method for the carboxyl-modified PVA resin is not limited to the aforementioned methods. For example, the PVA resin (a partially saponified product or a completely saponified product) may be allowed to post-react with a carboxyl-containing compound, such as dicarboxylic acid, aldehyde carboxylic acid or hydroxycarboxylic acid, having a functional group reactive with a hydroxyl group.

Where a PVA resin modified with a sulfonic acid group (sulfonic acid-modified PVA resin) is used, exemplary preparation methods for the sulfonic acid-modified PVA resin include: a method in which the vinyl ester compound is copolymerized with sulfonic acid such as vinylsulfonic acid, styrenesulfonic acid, allylsulfonic acid, methallylsulfonic acid or 2-acrylamido-2-methylpropanesulfonic acid, or its salt as a comonomer, and the resulting copolymer is saponified; and a method in which vinylsulfonic acid or its salt, or 2-acrylamido-2-methylpropanesulfonic acid or its salt is introduced into the PVA resin by Michael addition reaction.

On the other hand, exemplary methods for the post-modification of the unmodified PVA include acetoacetic acid esterification, acetalization, urethanation, etherification, grafting, phosphoric acid esterification, and oxyalkylenation of the unmodified PVA.

The carboxyl-containing unsaturated monomer and the vinyl ester compound may be copolymerized with some other common monomer, as long as the water solubility is not impaired. Examples of the common monomer include allyl esters of saturated carboxylic acids, α-olefins, alkyl vinyl ethers, alkyl allyl ethers, (meth)acrylamide, (meth)acrylonitrile, styrene, and vinyl chloride, which may be used alone or in combination.

### [Plasticizer (B)]

Where a chemical agent package is produced by using the water-soluble film of the present disclosure, for example, the material for the water-soluble film preferably contains a plasticizer (B) in addition to the PVA resin (A) to impart the water-soluble film with flexibility.

A polyhydric alcohol (b1) having a higher melting point (80°C or higher) (hereinafter sometimes referred to simply as plasticizer (b1)), and a polyhydric alcohol (b2) having a lower melting point (50°C or lower) (hereinafter sometimes referred to simply as plasticizer (b2)) are used alone or in combination as the plasticizer (B).

Many sugar alcohols, monosaccharides, and polysaccharides are usable as the polyhydric alcohol (b1). Examples of the polyhydric alcohol (b1) include: divalent alcohols such as salicyl alcohol (83°C), catechol (105°C), resorcinol (110°C), hydroquinone (172°C), bisphenol-A (158°C), bisphenol-F (162°C), and neopentyl glycol (127°C); trivalent alcohols such as phloroglucinol (218°C); tetravalent alcohols such as erythritol (121°C), threitol (88°C), and pentaerythritol (260°C); pentavalent alcohols such as xylitol (92°C), arabitol (103°C), fucitol (153°C), glucose (146°C), and fructose (104°C); hexavalent alcohols such as mannitol (166°C), sorbitol (95°C), and inositol (225°C); octavalent alcohols such as lactitol (146°C), sucrose (186°C), and trehalose (97°C); and nonavalent and higher-valent alcohols such as maltitol (145°C), which may be used alone or in combination. Parenthesized numerals indicate the melting points of the respective compounds.

On the other hand, many aliphatic alcohols are usable as the polyhydric alcohol (b2). Preferred examples of the polyhydric alcohol (b2) include: divalent alcohols such as ethylene glycol (-13°C), diethylene glycol (-11°C), triethylene glycol (-7°C), propylene glycol (-59°C), tetraethylene glycol (-5.6°C), 1,3-propanediol (-27°C), 1,4-butanediol (20°C), 1,6-hexanediol (40°C), tripropylene glycol, and polyethylene glycols having a molecular weight of not greater than 2,000; and trivalent and higher-valent alcohols such as glycerin (18°C), diglycerin, and triethanolamine (21°C), which may be used alone or in combination. Parenthesized numerals indicate the melting points of the respective compounds.

The polyhydric alcohols (b1) and (b2) are preferably used in combination as the plasticizer (B), because the flexibility and the like of the water-soluble film can be properly controlled. For the control of the flexibility and the like of the water-soluble film, the plasticizer (B) is desirably at least one selected from the group consisting of glycerin and sorbitol.

In the present disclosure, an additional plasticizer (b3) may be used in combination with the plasticizers (b1) and (b2) described above. Examples of the plasticizer (b3) include: alcohols such as trimethylolpropane (58°C), diethylene glycol monomethyl ether, cyclohexanol, carbitol, and polypropylene glycol; ethers such as dibutyl ether; carboxylic acids such as stearic acid, oleic acid, linoleic acid, linolenic acid, sorbic acid, citric acid, and adipic acid; ketones such as cyclohexanone; amines such as monoethanolamine, triethanolamine, ethylenediamine, and imidazole compounds; and amino acids such as alanine, glycine, aspartic acid, glutamic acid, histidine, lysine, and cysteine, which may be used alone or in combination.

In the present disclosure, the proportion of the plasticizer (B) is preferably 5 to 100 parts by weight, particularly preferably 6 to 70 parts by weight, more preferably 8 to 60 parts by weight, especially preferably 10 to 50 parts by weight, based on 100 parts by weight of the PVA resin (A). If the proportion of the plasticizer (B) is excessively small, a package produced by packaging a liquid such as a liquid detergent with the water-soluble film tends to be deteriorated in shape stability over time. If the proportion of the plasticizer (B) is excessively great, the water-soluble film is liable to have a lower mechanical strength, and to suffer from blocking.

The weight ratio (b1/b2) of the plasticizer (b1) to the plasticizer (b2) is preferably 0.1 to 5, particularly preferably 0.2 to 4.5, more preferably 0.5 to 4, especially preferably 0.7 to 3. If the weight ratio of the plasticizer (b1) is excessively low, the water-soluble film tends to be excessively soft, thereby suffering from blocking. If the weight ratio of the plasticizer (b1) is excessively high, the water-soluble film tends to be excessively hard to be thereby brittle in a lower humidity environment.

The proportion of the plasticizer (b1) is preferably 5 to 40 parts by weight, particularly preferably 8 to 30 parts by weight, more preferably 10 to 25 parts by weight, based on 100 parts by weight of the PVA resin (A), and the proportion of the plasticizer (b2) is preferably 5 to 40 parts by weight, particularly preferably 10 to 35 parts by weight, more preferably 15 to 30 parts by weight, based on 100 parts by weight of the PVA resin (A).

If the proportion of the plasticizer (b1) is excessively small, the water-soluble film tends to be excessively soft, thereby suffering from blocking. If the proportion of the plasticizer (b1) is excessively great, the water-soluble film tends to be excessively hard to be thereby brittle in the lower humidity environment. If the proportion of the plasticizer (b2) is excessively small, the water-soluble film tends to be excessively hard to be thereby brittle in the lower humidity environment. If the proportion of the plasticizer (b2) is excessively great, the water-soluble film tends to be excessively soft, thereby suffering from blocking.

Further, the total proportion of the plasticizer (b1) and the plasticizer (b2) is preferably not less than 70 wt.%, particularly preferably not less than 80 wt.%, more preferably not less than 87 wt.%, especially preferably not less than 90 wt.%, further preferably not less than 95 wt.%, based on the overall weight of the plasticizer (B). Particularly preferably, the plasticizer (B) includes only the plasticizer (b1) and the plasticizer (b2). If the total proportion of the plasticizers (b1) and (b2) is excessively small, the mechanical strength tends to be reduced.

As required, the material for the water-soluble film of the present disclosure preferably contains a surfactant (C) and a filler (D) in addition to the PVA resin (A) and the plasticizer (B).

### [Surfactant (C)]

In the present disclosure, the surfactant (C) is used for improvement of the peelability of the water-soluble film when the film is removed from a cast surface in the production of the water-soluble film. Typical examples of the surfactant (C) include nonionic surfactant and anionic surfactant, which may be used alone or in combination.

Examples of the nonionic surfactant include:
polyoxyethylene alkyl ethers such as polyoxyethylene hexyl ether, polyoxyethylene heptyl ether, polyoxyethylene octyl ether, polyoxyethylene nonyl ether, polyoxyethylene decyl ether, polyoxyethylene dodecyl ether, polyoxyethylene tetradecyl ether, polyoxyethylene hexadecyl ether, polyoxyethylene octadecyl ether, polyoxyethylene eicosyl ether, polyoxyethylene oleyl ether, ethylene oxide adduct of coconut oil-reduced alcohol, and ethylene oxide adduct of beef tallow-reduced alcohol;
polyoxyethylene alkyl phenyl ethers such as polyoxyethylene nonyl phenyl ether, polyoxyethylene octyl nonyl ether, and polyoxyethylene dodecyl phenyl ether;
higher fatty acid alkanolamides such as caproic acid mono- or diethanolamide, caprylic acid mono- or diethanolamide, capric acid mono- or diethanolamide, lauric acid mono- or diethanolamide, palmitic acid mono- or diethanolamide, stearic acid mono- or diethanolamide, oleic acid mono- or diethanolamide, and coconut oil fatty acid mono- or diethanolamide, and higher fatty acid alkanolamides each containing propanolamide or butanolamide instead of ethanolamide in the aforementioned higher fatty acid mono- or diethanolamides;
higher fatty acid amides such as caproamide, caprylamide, capramide, lauramide, palmitamide, stearamide, and oleamide;
hydroxyethyl laurylamine, and polyoxyethylene alkylamines such as polyoxyethylene hexylamine, polyoxyethylene heptylamine, polyoxyethylene octylamine, polyoxyethylene nonylamine, polyoxyethylene decylamine, polyoxyethylene dodecylamine, polyoxyethylene tetradecylamine, polyoxyethylene hexadecylamine, polyoxyethylene octadecylamine, polyoxyethylene oleylamine, and polyoxyethylene eicosylamine;
polyoxyethylene higher fatty acid amides such as polyoxyethylene caproamide, polyoxyethylene caprylamide, polyoxyethylene capramide, polyoxyethylene lauramide, polyoxyethylene palmitamide, polyoxyethylene stearamide, and polyoxyethylene oleamide;
amine oxides such as dimethyllaurylamine oxide, dimethylstearylamine oxide, and dihydroxyethyllaurylamine oxide;
polyhydric alcohol fatty acid esters such as sorbitan monolaurate, sorbitan monopalmitate, sorbitan monostearate, and sorbitan monooleate; and
polyoxyethylene polyhydric alcohol fatty acid esters such as polyoxyethylene sorbitan monolaurate, polyoxyethylene sorbitan monopalmitate, polyoxyethylene sorbitan monostearate, and polyoxyethylene sorbitan monooleate.

These may be used alone or in combination.

Usable examples of the anionic surfactant include:
(1) sulfuric acid ester salt type surfactant; (2) phosphoric acid ester salt type surfactant, (3) carboxylic acid salt type surfactant; and (4) sulfonic acid salt type surfactant.

Examples of the sulfuric acid ester salt type surfactant (1) include:
alkyl sulfuric acid ester salts such as sodium hexyl sulfate, sodium heptyl sulfate, sodium octyl sulfate, sodium nonyl sulfate, sodium decyl sulfate, sodium dodecyl sulfate, sodium tetradecyl sulfate, sodium hexadecyl sulfate, sodium octadecyl sulfate, and sodium eicosyl sulfate, and potassium alkyl sulfates, calcium alkyl sulfates, and ammonium alkyl sulfates similar to the aforementioned sodium alkyl sulfates;
polyoxyethylene alkyl ether sulfuric acid salts such as sodium polyoxyethylene hexyl ether sulfate, sodium polyoxyethylene heptyl ether sulfate, sodium polyoxyethylene octyl ether sulfate, sodium polyoxyethylene nonyl ether sulfate, sodium polyoxyethylene decyl ether sulfate, sodium polyoxyethylene dodecyl ether sulfate, sodium polyoxyethylene tetradecyl ether sulfate, sodium polyoxyethylene hexadecyl ether sulfate, sodium polyoxyethylene octadecyl ether sulfate, and sodium polyoxyethylene eicosyl ether sulfate, and potassium polyoxyethylene alkyl ether sulfates and ammonium polyoxyethylene alkyl ether sulfates similar to the aforementioned sodium polyoxyethylene alkyl ether sulfates;
polyoxyethylene alkyl phenyl ether sulfuric acid salts such as sodium polyoxyethylene hexyl phenyl ether sulfate, sodium polyoxyethylene heptyl phenyl ether sulfate, sodium polyoxyethylene octyl phenyl ether sulfate, sodium polyoxyethylene nonyl phenyl ether sulfate, sodium polyoxyethylene decyl phenyl ether sulfate, sodium polyoxyethylene dodecyl phenyl ether sulfate, sodium polyoxyethylene tetradecyl phenyl ether sulfate, sodium polyoxyethylene hexadecyl phenyl ether sulfate, sodium polyoxyethylene octadecyl phenyl ether sulfate, and sodium polyoxyethylene eicosyl phenyl ether sulfate, and potassium polyoxyethylene alkyl phenyl ether sulfates and ammonium polyoxyethylene alkyl phenyl ether sulfates similar to the aforementioned sodium polyoxyethylene alkyl phenyl ether sulfates;
higher fatty acid alkanolamide sulfuric acid ester salts such as sodium caproic ethanolamide sulfate, sodium caprylic ethanolamide sulfate, sodium capric ethanolamide sulfate, sodium lauric ethanolamide sulfate, sodium palmitic ethanolamide sulfate, sodium stearic ethanolamide sulfate, and sodium oleic ethanolamide sulfate, potassium higher fatty acid ethanolamide sulfates similar to the aforementioned sodium higher fatty acid ethanolamide sulfates, and higher fatty acid alkanolamide sulfates each containing propanolamide or butanolamide instead of ethanolamide in the aforementioned higher fatty acid ethanolamide sulfates; and
sulfated oils, higher alcohol ethoxysulfates, monoglysulfates, and other sulfuric acid ester salts.

Examples of the phosphoric acid ester salt type surfactant (2) include:
alkyl phosphoric acid ester salts such as sodium octyl phosphate, sodium lauryl phosphate, sodium myristyl phosphate, and sodium coconut oil fatty acid phosphate, and potassium alkyl phosphates and calcium alkyl phosphates similar to the aforementioned sodium alkyl phosphates;
alkyl phosphoric acid ester amine salts such as lauryl phosphate triethanolamine salts and oleyl phosphate diethanolamine salts;
polyoxyethylene alkyl ether phosphoric acid ester salts such as sodium polyoxyethylene lauryl ether phosphate, sodium polyoxyethylene isotridecyl ether phosphate, sodium polyoxyethylene myristyl ether phosphate, sodium polyoxyethylene cetyl ether phosphate, sodium polyoxyethylene oleyl ether phosphate, sodium dipolyoxyethylene oleyl ether phosphate, and sodium polyoxyethylene stearyl ether phosphate, and potassium polyoxyethylene alkyl ether phosphates and calcium polyoxyethylene alkyl ether phosphates similar to the aforementioned sodium polyoxyethylene alkyl ether phosphates;
polyoxyalkylene alkyl ether phosphoric acid ester amine salts such as polyoxyalkylene lauryl ether phosphate monoethanolamine salts, polyoxyalkylene palmityl ether phosphate monoethanolamine salts, polyoxyalkylene stearyl ether phosphate monoethanolamine salts, and polyoxyalkylene oleyl ether phosphate monoethanolamine salts;
polyoxyethylene alkyl phenyl ether phosphoric acid ester amine salts such as polyoxyethylene allyl phenyl ether phosphate amine salt; and
polyoxyethylene fatty acid amide ether phosphoric acid ester salts such as sodium polyoxyethylene lauryl amide ether phosphate, potassium polyoxyethylene lauryl amide ether phosphate, and calcium polyoxyethylene lauryl amide ether phosphate.

Examples of anionic surfactants other than the sulfuric acid ester salt type surfactant (1) and the phosphoric acid ester salt type surfactant (2) include:
(3) carboxylic acid salt type surfactants such as fatty acid soaps, N-acylamino acids and salts thereof, polyoxyethylene alkyl carboxylic acid ester salts, and acylated peptides; and
(4) sulfonic acid salt type surfactants such as alkylbenzenesulfonic acid salts, alkylnaphthalenesulfonic acid salts, formalin polycondensates of naphthalenesulfonic acid salts, formalin condensates of melaminesulfonic acid salts, alkyl sulfosuccinic acid disalts, polyoxyethylene alkylsulfosuccinic acid disalts, alkylsulfoacetic acid salts, α-olefinsulfonic acid salts, N-acylmethyltaurine salts, and sodium dimethyl-5-sulfoisophthalate.

Of the aforementioned surfactants (C), the polyoxyethylene alkyl ethers, the polyoxyethylene alkyl phenyl ethers, the polyoxyethylene alkylamines, the polyoxyethylene higher fatty acid amides, the polyoxyethylene polyhydric alcohol fatty acid esters, the polyoxyethylene alkyl ether sulfuric acid salts, the polyoxyethylene alkyl phenyl ether sulfuric acid salts, the polyoxyethylene alkyl ether phosphoric acid ester salts, the polyoxyethylene alkyl ether phosphate amine salts, and the polyoxyethylene fatty acid amide ether phosphoric acid ester salts, which are surfactants each having a polyoxyalkylene structure, are preferred, because these surfactants are highly hydrophilic and highly compatible with the PVA resin (A). This suppresses the occurrence of defective cavities and unevenness in a surface of the water-soluble film, thereby providing a film surface smoothing effect.

In order to provide an excellent peelability by addition of a small amount of the surfactant, on the other hand, the anionic surfactants are preferred. Particularly, the sulfuric acid ester salt surfactants and the phosphoric acid ester salt surfactants such as the alkyl sulfuric acid ester salts, the polyoxyethylene alkyl ether sulfuric acid salts, the polyoxyethylene alkyl phenyl ether sulfuric acid salts, the higher fatty acid alkanolamide sulfuric acid ester salts, the alkyl phosphoric acid ester salts, the alkyl phosphoric acid ester amine salts, the polyoxyethylene alkyl ether phosphoric acid ester salts, the polyoxyethylene alkyl ether phosphoric acid ester amine salts, the polyoxyethylene alkyl phenyl ether phosphoric acid ester amine salts, and the polyoxyethylene fatty acid amide ether phosphoric acid ester salts are preferred. Particularly, the phosphoric acid ester salts such as the alkyl phosphoric acid ester salts, the alkyl phosphoric acid ester amine salts, the polyoxyethylene alkyl ether phosphoric acid ester salts, the polyoxyethylene alkyl ether phosphoric acid ester amine salts, the polyoxyethylene alkyl phenyl ether phosphoric acid ester amine salts, and the polyoxyethylene fatty acid amide ether phosphoric acid ester salts are preferred.

In order to ensure the smoothness of the film surface and impart the film with an excellent peelability by addition of a small amount of the surfactant, the polyoxyethylene alkyl ether phosphoric acid ester salts and the polyoxyethylene alkyl ether phosphoric acid ester amine salts, which are phosphoric acid ester salt type surfactants each having a polyoxyalkylene structure, are most preferred.

These may be used alone or in combination.

The surfactant (C) is preferably any of the surfactants each having a polyoxyalkylene structure. In this case, the surfactant (C) is highly hydrophilic, thereby providing a film surface smoothing effect.

In order to impart the water-soluble film with a higher peelability with respect to a metal surface, the proportion of the surfactant (C) is preferably 0.01 to 3 parts by weight, particularly preferably 0.05 to 1.5 parts by weight, more preferably 0.08 to 0.5 parts by weight, based on 100 parts by weight of the PVA resin (A). By thus reducing the proportion of the surfactant (C), the number of the dark defects can be reduced, thereby improving the transparency of the water-soluble film. If the proportion of the surfactant (C) is much smaller than the aforementioned ranges, it tends to be impossible to properly peel off the water-soluble film from the metal surface, thereby reducing the productivity of the film. If the proportion of the surfactant (C) is much greater than the aforementioned ranges, the amount of aggregates of the PVA resin (A) and the surfactant (C) tends to be increased, thereby increasing the haze of the film.

### [Filler (D)]

In the present disclosure, the filler (D) is used to impart the water-soluble film with an antiblocking property. Examples of the filler (D) include inorganic filler and organic filler. Of these, the organic filler is preferred. The filler (D) preferably has an average particle diameter of 0.1 to 20 µm, particularly preferably 0.5 to 15 µm. The average particle diameter may be measured, for example, by means of a particle size distribution measuring apparatus of laser diffraction type or the like.

The inorganic filler preferably has an average particle diameter of 1 to 10 µm. If the average particle diameter is excessively small, the water-soluble film tends to have a lower dispersibility in water. If the average particle diameter is excessively great, the water-soluble film tends to suffer from pinholes when being stretched in film processing, resulting in poorer appearance.

Specific examples of the inorganic filler include talc, clay, silicon dioxide, diatom earth, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate, which may be used alone or in combination.

The organic filler preferably has an average particle diameter of 0.5 to 20 µm, particularly preferably 0.5 to 10 µm, more preferably 0.5 to 7 µm, especially preferably 0.5 to 5 µm. If the average particle diameter is excessively small, the costs tend to be increased. If the average particle diameter is excessively great, the water-soluble film tends to suffer from pinholes when being stretched in the film processing.

Examples of the organic filler include starch, melamine resins, polymethyl (meth)acrylate resins, polystyrene resins, polylactic acids, and other biodegradable resins. Particularly, biodegradable resins such as the polymethyl (meth)acrylate resins, the polystyrene resins, and the starch are preferably used. These organic fillers may be used alone or in combination.

Examples of the starch include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, and the like), physically modified starches (a-starch, fractionated amylose, moist heat-treated starch, and the like), enzyme-modified starches (hydrolyzed dextrin, enzyme-decomposed dextrin, amylose, and the like), chemically degraded starches (acid-treated starch, hypochlorous acid-oxidized starch, dialdehyde starch, and the like), chemically modified starch derivatives (esterified starch, etherified starch, cationized starch, crosslinked starch, and the like). Of these, the raw starches, particularly the corn starch and the rice starch, are preferably used from the viewpoint of availability and economy. These may be used alone or in combination

The proportion of the filler (D) is preferably 1 to 30 parts by weight, particularly preferably 2 to 25 parts by weight, more preferably 2.5 to 20 parts by weight, based on 100 parts by weight of the PVA resin (A). If the proportion of the filler (D) is excessively small, the antiblocking property tends to be deteriorated. If the proportion of the filler (D) is excessively great, the water-soluble film tends to suffer from pinholes when being stretched in the film processing.

In the present disclosure, the water-soluble film may contain additional water-soluble polymer (e.g., sodium polyacrylate, polyethylene oxide, polyvinyl pyrrolidone, dextrin, chitosan, chitin, methylcellulose, hydroxyethylcellulose or the like), perfume, rust preventing agent, colorant, bulking agent, defoaming agent, UV absorber, liquid paraffins, fluorescent brightener, and bitter component (e.g., denatonium benzoate or the like), as long as the object of the present disclosure is not impaired. These may be used alone or in combination.

In the present disclosure, the water-soluble film preferably further contains an antioxidant for suppression of yellowing. Examples of the antioxidant include sulfites such as sodium sulfite, potassium sulfite, calcium sulfite, and ammonium sulfite, tartaric acid, ascorbic acid, sodium thiosulfate, catechol, and Rongalite. Of these, the sulfites are preferred, and sodium sulfite is particularly preferred. The proportion of the antioxidant is preferably 0.1 to 10 parts by weight, particularly preferably 0.2 to 5 parts by weight, more preferably 0.3 to 3 parts by weight, based on 100 parts by weight of the PVA resin (A).

### [Water-Soluble Film Production Method]

An exemplary method for producing the water-soluble film of the present disclosure in a practical manner include the steps of: dissolving a PVA resin composition in water typically with heating to not higher than 100°C to prepare a PVA resin aqueous solution; subjecting the PVA resin aqueous solution to a pressure and heat treatment at a pressure of 0.10 to 1.0 MPa at a temperature of not lower than 130°C at a humidity of not lower than 90%RH for not shorter than 1 hour; and casting and drying the PVA resin aqueous solution subjected to the pressure and heat treatment. That is, the pressure and heat treatment suppresses the formation of the aggregates of the PVA resin (A) and the surfactant (C), thereby making it possible to produce the highly transparent water-soluble film of the present disclosure in a practical manner.

The PVA resin aqueous solution is prepared by preparing the resin composition containing the PVA resin (A) and, as required, further containing the plasticizer (B), the surfactant (C), the filler (D), and the like, and dissolving or dispersing the resin composition in water.

As described above, the pressure and heat treatment is performed on the PVA resin aqueous solution at a pressure of 0.10 to 1.0 MPa at a temperature of not lower than 130°C at a humidity of not lower than 90%RH for not shorter than 1 hour.

The pressure is preferably 0.13 to 0.50 MPa, particularly preferably 0.15 to 0.30 MPa. If the pressure is excessively low, it tends to be impossible to provide the effects of the present disclosure because the amount of the aggregates of the PVA resin (A) and the surfactant (C) cannot be reduced. If the pressure is excessively high, it will take a longer period of time for reduction of the pressure. This tends to reduce the solution viscosity due to thermal decomposition, to form fisheyes due to crosslinking, and to reduce the solubility due to increase in saponification degree.

The temperature for the pressure and heat treatment is preferably 130°C to 150°C, particularly preferably 130°C to 140°C. If the temperature is excessively low, it tends to be impossible to reduce the amount of the aggregates of the PVA resin (A) and the surfactant (C), thereby increasing the haze of the resulting film. If the temperature is excessively high, this tends to reduce the solution viscosity due to thermal decomposition, to form fisheyes due to crosslinking, and to reduce the solubility due to increase in saponification degree.

The humidity is preferably 95 to 100%RH, particularly preferably 100%RH. If the humidity is excessively low, it tends to be impossible to provide the effects of the present disclosure because the amount of the aggregates of the PVA resin (A) and the surfactant (C) cannot be reduced.

The period for the pressure and heat treatment is preferably 2 to 12 hours, particularly preferably 3 to 8 hours. If the period for the pressure and heat treatment is excessively short, it tends to be impossible to provide the effects of the present disclosure because the amount of the aggregates of the PVA resin (A) and the surfactant (C) cannot be reduced. If the period for the pressure and heat treatment is excessively long, this tends to reduce the solution viscosity due to thermal decomposition, to form fisheyes due to crosslinking, and to reduce the solubility due to increase in saponification degree.

That is, the pressure and heat treatment performed under the aforementioned conditions makes it possible to produce the highly transparent water-soluble film of the present disclosure in a practical manner, while suppressing the formation of the aggregates of the surfactant (C) and the like.

The pressure and heat treatment can be properly performed, for example, by means of a HAST chamber EHS-411M available from ESPEC Corporation.

In order to provide the water-soluble film having a very small number of dark defects as defined in the present disclosure, it is particularly important to perform the pressure and heat treatment in the aforementioned manner. That is, it is not easy to prevent the formation of the aggregates of the PVA resin (A) and the surfactant (C) under common dissolving conditions (typically at not higher than 100°C at an ordinary pressure) in a production process. In contrast, the pressure and heat treatment described above can suppress the formation of the aggregates of the PVA resin (A) and the surfactant (C), thereby effectively suppressing the formation of the dark defects attributable to the formation of the aggregates in the water-soluble film.

After the pressure and heat treatment, a defoaming process may be performed on the PVA resin aqueous solution as required. Exemplary methods for the defoaming process include stationary defoaming method, vacuum defoaming method, and biaxial extrusion defoaming method. Particularly, the stationary defoaming method and the biaxial extrusion defoaming method are preferred.

The temperature for the stationary defoaming method is typically 50°C to 100°C, preferably 70°C to 95°C, and the defoaming period is typically 2 to 30 hours, preferably 5 to 24 hours.

In the step of casting and drying the PVA resin aqueous solution subjected to the pressure and heat treatment, as required, a heat treatment is further performed to provide the PVA water-soluble film of the present disclosure.

This step may be performed, for example, in the following manner.

An exemplary method for casting the PVA resin aqueous solution subjected to the pressure and heat treatment is a method in which the PVA resin aqueous solution subjected to the pressure and heat treatment is discharged from a slit of a T-slit die or the like to be cast on a cast surface such as a metal surface of an endless belt or a drum roll, or a surface of a plastic base such as a polyethylene terephthalate film. Alternatively, the PVA resin aqueous solution subjected to the pressure and heat treatment may be cast on the cast surface by means of an applicator.

The PVA resin aqueous solution preferably has a solid concentration of 10 to 50 wt.%, particularly preferably 15 to 40 wt.%, more preferably 20 to 35 wt.%, when being cast. If the solid concentration is excessively low, the productivity of the water-soluble film tends to be reduced. If the solid concentration is excessively high, the PVA resin aqueous solution tends to have an excessively high viscosity, requiring a longer period of time for defoaming the dope. Further, when the PVA resin aqueous solution is cast on the cast surface, a die line tends to occur in the water-soluble film.

The temperature of the PVA resin aqueous solution (at an outlet port) immediately before the casting is preferably 60°C to 98°C, particularly preferably 70°C to 95°C. If the temperature is excessively low, the productivity tends to be reduced because a longer drying period is required. If the temperature is excessively high, the PVA resin aqueous solution tends to suffer from foaming or the like.

After the casting, the PVA resin aqueous solution is dried on the cast surface to be thereby formed into the water-soluble film. The surface temperature of the cast surface is preferably 50°C to 110°C, particularly preferably 70°C to 100°C. If the surface temperature is excessively low, the film tends to have a higher water content due to insufficient drying to thereby suffer from the blocking. If the surface temperature is excessively high, the PVA resin aqueous solution is liable to foam, resulting in film formation failure.

Exemplary methods for the drying in the film formation include: a method in which a heat roll is used for the drying; a method in which hot air is applied on the film by means of a floating dryer; and a method in which a far infrared device or a dielectric heating device is used for the drying. These methods may be used in combination.

The film forming rate is preferably 3 to 80 m/minute, particularly preferably 5 to 60 m/minute, more preferably 8 to 50 m/minute.

The formed film is preferably further heat-treated. A heat roll may be used for the heat treatment. Alternatively, the heat treatment may be performed by applying hot air on the film by means of a floating dryer, or the heat treatment may be performed by means of a far infrared device or a dielectric heating device. Particularly, the heat roll is preferably used from the viewpoint of the productivity.

The temperature for the heat treatment is preferably 50°C to 150°C, particularly preferably 70°C to 130°C. The period for the heat treatment is preferably 1 to 60 seconds, particularly preferably 3 to 50 seconds, more preferably 5 to 40 seconds.

The thickness of the PVA water-soluble film of the present disclosure may be properly selected according to the use purpose, but is preferably 10 to 120 µm, particularly preferably 15 to 110 µm, more preferably 20 to 100 µm. If the thickness of the PVA water-soluble film is excessively small, the mechanical strength of the film tends to be reduced. If the thickness of the PVA water-soluble film is excessively great, the film tends to be dissolved in water at a lower dissolving rate, and the film forming efficiency tends to be reduced.

The width of the PVA water-soluble film may be properly selected according to the use purpose, but is preferably 300 to 5,000 mm, particularly preferably 500 to 4,000 mm, more preferably 800 to 3,000 mm. If the width of the PVA water-soluble film is excessively small, the productivity tends to be reduced. If the width of the PVA water-soluble film is excessively great, it tends to be difficult to control the slack of the film and the thickness of the film.

The length of the PVA water-soluble film may be properly selected according to the use purpose, but is preferably 500 to 20,000 m, particularly preferably 800 to 15,000 m, more preferably 1,000 to 10,000 m. If the length of the PVA water-soluble film is excessively small, troublesome film switching will be required. If the length of the PVA water-soluble film is excessively great, the resulting film roll tends to have a poorer appearance due to tight winding and an excessively great weight.

The PVA water-soluble film may have plain surfaces, but one or both of the surfaces of the PVA water-soluble film are preferably subjected to a texturing process so as to be imparted with an emboss pattern, a minute uneven pattern, a special engraved pattern or the like for the antiblocking property, the slidability during the processing, and the appearance, and for suppression of adhesion between film products.

The temperature for the texturing process is typically 60°C to 150°C, preferably 80°C to 140°C. The pressure for the texturing process is typically 2 to 8 MPa, preferably 3 to 7 MPa. The period for the texturing process depends on the texturing pressure and the texturing rate, but is typically 0.01 to 5 seconds, preferably 0.1 to 3 seconds.

After the texturing process, as required, the PVA water-soluble film may be subjected to a cooling process for prevention of unintended thermal stretching of the film.

In the present disclosure, the resulting PVA water-soluble film preferably has a water content of 3 to 15 wt.%, particularly preferably 5 to 14 wt.%, more preferably 6 to 13 wt.%, for the mechanical strength and the sealability. If the water content is excessively low, the film tends to be excessively hard. If the water content is excessively high, the blocking is liable to occur. The water content of the PVA water-soluble film may be controlled by properly setting conditions for the drying and the moisture conditioning.

The water content is measured in conformity with JIS K6726 3.4. The resulting volatile content is defined as the water content.

In the present disclosure, the water-soluble film is preferably produced, for example, at 10°C to 35°C, particularly preferably 15°C to 30°C. The humidity is typically not higher than 70%RH.

In the present disclosure, the resulting PVA water-soluble film is wound up around a core pipe (S1) into a film roll. The resulting film roll may be supplied as a product on an as-is basis. Preferably, the PVA water-soluble film thus wound up may be slit to a desired width, then wound up again around a core pipe (S2) having a length corresponding to the desired film width, and supplied in the form of a film roll having a desired size.

The core pipe (S1) around which the film is wound up has a hollow cylindrical shape. The material for the core pipe (S1) may be properly selected from metals, plastics, and the like, but is preferably a metal for robustness and strength.

The core pipe (S1) preferably has an inner diameter of 3 to 30 cm, more preferably 10 to 20 cm.

The core pipe (S1) preferably has a wall thickness of 1 to 30 mm, more preferably 2 to 25 mm.

The core pipe (S1) needs to have a length that is greater than the width of the film, and opposite end portions of the core pipe (S1) preferably project by 1 to 50 cm from opposite ends of the film roll.

The core pipe (S2) has a hollow cylindrical shape. The material for the core pipe (S2) may be properly selected from paper, metals, plastics, and the like, but is preferably paper for weight reduction and handling ease.

The core pipe (S2) preferably has an inner diameter of 3 to 30 cm, more preferably 10 to 20 cm.

The core pipe (S2) preferably has a wall thickness of 1 to 30 mm, more preferably 3 to 25 mm.

The core pipe (S2) may have a length that is equal to or greater than the width of the PVA water-soluble film product, but is preferably greater than the film width by 0 cm to 50 cm.

The PVA water-soluble film is slit to a desired width when being wound up around the core pipe (S2).

For the slitting, a shear blade or a leather blade is used. The PVA water-soluble film is preferably slit by means of the shear blade from the viewpoint of the smoothness of a sectional surface of the slit film.

The film roll produced by winding up the PVA water-soluble film of the present disclosure around the core pipe is preferably wrapped with a wrapping film of a resin having a water vapor barrier property. The wrapping film is not particularly limited, but a wrapping film having a water vapor permeability of not greater than 10 g/m²·24 hr (as measured in conformity with JIS Z0208) is usable. Specific examples of the wrapping film include single-layer films such as high-density polyethylene film, low-density polyethylene film, polypropylene film, polyester film, polyvinylidene chloride-coated polypropylene film, and glass-deposited polyester film, laminate films including any of the aforementioned films, and laminate films including any of the aforementioned films and slit fabric, paper or nonwoven fabric. Examples of the laminate films include laminate film including glass-deposited polyester film and polyethylene film, and laminate film including polyvinylidene chloride-coated polypropylene film and polyethylene film.

The wrapping film is preferably subjected to an antistatic process for prevention of contamination with foreign matter. The wrapping film may contain an antistatic agent incorporated therein by kneading, or may be coated with the antistatic agent. Where the antistatic agent is incorporated in the wrapping film by the kneading, the antistatic agent is used in a proportion of about 0.01 to about 5 wt.% based on the weight of the PVA resin (A) . Where the wrapping film is coated with the antistatic agent, the antistatic agent is used in an amount of about 0.01 to about 1 g/m².

Examples of the antistatic agent include alkyl diethanolamines, polyoxyethylene alkylamines, higher fatty acid alkanolamides, and sorbitan fatty acid esters. These may be used alone or in combination.

The film roll wrapped with the wrapping film of the water vapor barrier resin is preferably further wrapped with a wrapping film of an aluminum material. Examples of the aluminum material film include aluminum foil, laminate film including aluminum foil and moisture-resistant plastic film (e.g., laminate film including aluminum foil and polyethylene film), laminate film including aluminum-deposited film and moisture-resistant plastic film (e.g., laminate film including aluminum-deposited polyester film and polyethylene film), and laminate film including alumina-deposited film and moisture-resistant plastic film (e.g., laminate film including alumina-deposited polyester film and polyethylene film). In the present disclosure, laminate film including aluminum foil and polyolefin film, and laminate film including aluminum-deposited film and polyolefin film are particularly useful, and laminate film of stretched polypropylene film/polyethylene film/aluminum foil/polyethylene film structure, and laminate film of stretched polypropylene film/low-density polyethylene film/aluminum foil structure are especially useful.

The film roll is preferably first wrapped with an inner wrapping film of the water vapor barrier resin and then with an outer wrapping film of the aluminum material, and widthwise margins of the wrapping films are preferably squeezed into the core pipe.

Protection pads each having a core pipe through-hole are respectively attached to opposite ends of the film roll directly or with the intervention of the wrapping film in order to prevent the ends of the film roll from being damaged or contaminated with dust or other foreign matter.

Practical examples of the protection pads include disk-shaped sheets and films conforming to the shape of the film roll. The protection pads are preferably made of foam, woven fabric or nonwoven fabric so as to be imparted with a cushioning function for enhanced protection effect. Further, the protection pads may additionally contain a desiccant, or may be laminated with or blended with the desiccant so as to protect the film roll from moisture.

Plastics are useful as the material for the protection pads. Specific examples of the plastics include polystyrenes, polyethylenes, polypropylenes, polyesters, and polyvinyl chlorides.

Examples of the desiccant-containing protection pads include moisture absorbing layers each produced by allowing a formable material such as natural cellulose, synthetic cellulose, glass cloth or nonwoven fabric to contain a desiccant or a water absorbing agent such as calcium chloride, silica gel, molecular sieves, saccharide (particularly, saccharide having a higher osmotic pressure) or water absorbing resin by a dispersing method, an impregnating method or a coating/drying method, or moisture absorbing layers each produced by sandwiching the desiccant or the water absorbing agent between layers of the formable material or between thermoplastic resin films such as polyester films, polyethylene films, polypropylene films or TEFLON (registered trade name) films.

Commercially available examples of a desiccant sheet include AIDI SHEET available from Aidi Co., Ltd., ARROW SHEET and ZEO SHEET available from Shinagawa Chemicals Co., Ltd., and HIGHSHEET DRY available from Highsheet Kogyo Co., Ltd.

The film roll wrapped in the aforementioned manner is preferably supported in the air without contact with the floor by providing brackets (support plates) to the projecting opposite end portions of the core pipe or by resting the projecting opposite end portions on trestles and, in this state, stored or transported. Where the film has a relatively small width, the brackets are used. Where the film has a relatively great width, the trestles are used.

The brackets are each made of a plywood or a plastic plate, and dimensioned so that four edges thereof each have a length greater than the diameter of the film roll.

The pair of brackets are disposed upright in opposed relation to the opposite end portions of the core pipe projecting from the film roll, and engaged with the film roll. For the engagement, the brackets each have a through-hole formed in a center portion thereof as having a diameter slightly greater than the core pipe diameter. Alternatively, the brackets may each have a generally U-shape with a through-hole extending from a top edge thereof to a center portion thereof for easy insertion of the core pipe.

The film roll supported by the brackets is contained in a carton such as cardboard box and, in this state, stored and transported. Where rectangular brackets are used, the four corners of each of the brackets are preferably cut off for smooth handling of the film roll during the storage.

Further, it is preferred to firmly fix the pair of brackets to each other by a binding tape. For practical prevention of displacement and slack of the tape, the brackets may each have a tape displacement preventing groove formed in a side face (thicknesswise portion) thereof as having substantially the same width as the tape.

It is desirable to avoid an excessively high temperature, an excessively low temperature, an excessively low humidity, and an excessively high humidity when the wrapped film roll is stored or transported. Specifically, the wrapped film roll is preferably stored or transported at a temperature of 10°C to 30°C at a humidity of 40 to 75%RH.

The water-soluble film of the present disclosure thus produced is excellent in appearance with higher transparency. Therefore, the water-soluble film is useful for various packaging applications, particularly for unit packaging applications for chemical agents such as agricultural agents and detergents, and for (water pressure) transfer films, sanitary supplies such as sanitary napkins and disposable diapers, waste disposal supplies such as ostomy bags, medical supplies such as blood-absorbing sheets, and temporary base materials for seeding sheets, seeding tapes, and embroidery bases.

### <Water-Soluble Film for Packaging Chemical Agent>

The water-soluble film of the present disclosure can be advantageously used as a water-soluble film for packaging a chemical agent. Preferred examples of the chemical agent packaging water-soluble film include detergent packaging water-soluble film and agricultural chemical packaging water-soluble film. A liquid detergent packaging water-soluble film is particularly preferred.

Examples of the chemical agent to be packaged with the water-soluble film include agricultural chemicals such as pesticide, disinfectant, and herbicide, fertilizer, and detergents such as laundry detergent and dishwashing detergent. Particularly, the detergents are preferred.

The form of the chemical agent may be liquid or solid. The liquid chemical agent is liquid at 25°C, and the solid chemical agent may be in a granular form, a tablet form or a powdery form.

The chemical agent is preferably dissolved or dispersed in water for use. The pH of the chemical agent may be alkaline, neutral or acidic.

The liquid detergent preferably has a pH of 6 to 12, particularly preferably 7 to 11, when being dissolved or dispersed in water. The liquid detergent preferably has a water content of not higher than 15 wt.%, particularly preferably 0.1 to 10 wt.%, more preferably 0.1 to 7 wt.%.

The pH is measured in conformity with JIS K3362 8.3, and the water content is measured in conformity with JIS K3362 7.21.3.

### <Chemical Agent Package>

A chemical agent package of the present disclosure includes a package bag formed from the water-soluble film, and any of the aforementioned chemical agents contained in the package bag. The chemical agent is packaged with the water-soluble film and, therefore, when the chemical agent package is put in water, the water-soluble film is dissolved in water, and then the chemical agent is dissolved or dispersed in water to exhibit its effect. The chemical agent package is used in such an application. Accordingly, the chemical agent package is advantageously used as a unit chemical agent package in which a relatively small amount (e.g., a single dose) of a chemical agent is packaged.

Particularly, the chemical agent package of the present disclosure is advantageously used as a liquid detergent portion package. The chemical agent package of the present disclosure containing the liquid detergent is designed so that the chemical agent package maintains its shape with the liquid detergent contained therein during the storage thereof and, when the chemical agent package is used (for laundry washing), the package bag (water-soluble film) is brought into contact with water to be dissolved in water, whereby the contained liquid detergent flows out of the package bag.

The chemical agent package of the present disclosure is produced by bonding edge portions of two water-soluble films cut in a square or round shape to prepare a package bag and filling the package bag with the chemical agent. The chemical agent package typically has an edge length (diameter) of 10 to 50 mm, preferably 20 to 40 mm. The water-soluble films to be used for the package bag typically each have a thickness of 10 to 120 µm, preferably 15 to 110 µm, more preferably 20 to 100 µm. The amount of the chemical agent (e.g., the liquid detergent) to be contained in the package bag is typically 5 to 50 mL, preferably 10 to 40 mL.

A known method may be used for the production of the chemical agent package containing the chemical agent with the use of the water-soluble film of the present disclosure. Examples of the known method include: (1) heat sealing method; (2) water sealing method; and (3) adhesive sealing method, among which the water sealing method (2) is versatile and advantageous.

The chemical agent package of the present disclosure typically has a smooth surface. However, the outer surface of the package (water-soluble film) may be textured so as to be imparted with an emboss pattern, a minute uneven pattern, a special engraved pattern or the like for the antiblocking property, the slidability during processing, and the appearance, and for suppression of adhesion between products (packages).

### EXAMPLES

The embodiments of the present disclosure will hereinafter be described more specifically by way of examples thereof. However, it should be understood that the present disclosure be not limited to the examples within the scope of the present disclosure.

In the following examples, "parts" and "%" are based on weight.

### <Example 1>

A PVA resin aqueous solution having a solid concentration of 30% was prepared by dissolving 100 parts of a carboxyl-modified PVA (A) having a 4% aqueous solution viscosity of 23 mPa·s as measured at 20°C, an average saponification degree of 99 mol %, and a monomethyl maleate modification degree of 4.0 mol % as the PVA resin (A), 20 parts of sorbitol (b1) and 20 parts of glycerin (b2) as the plasticizer (B), 8 parts of starch (having an average particle diameter of 20 µm) as the filler (D), and 0.8 parts of a polyoxyalkylene alkyl ether phosphate monoethanolamine salt as the surfactant (C) in 345 parts of water with stirring at 90°C for 90 minutes. Then, the PVA resin aqueous solution was subjected to the pressure and heat treatment at a pressure of 0.17 MPa at a temperature of 130°C at a humidity of 100%RH for 5 hours by means of a HAST chamber EHS-411M (available from ESPEC Corporation). The PVA resin aqueous solution thus subjected to the pressure and heat treatment was allowed to stand still at 80°C for 1 day to be thereby defoamed, and then cast on a chromium-plated metal plate having a surface temperature controlled at 100°C by means of an applicator having a gap of 740 µm. After the cast PVA resin aqueous solution was dried on the metal plate at a temperature of 100°C for 2 minutes, the resulting dry film was peeled off at a peeling rate of 30 mm/second from the metal plate. Thus, a PVA water-soluble film having a length of 30 cm, a width of 15 cm, a thickness of 90 µm, and a water content of 9 wt.% was produced.

### <Example 2>

A PVA water-soluble film was produced in substantially the same manner as in Example 1, except that the proportion of the surfactant (C) was changed to 0.2 parts.

### <Comparative Example 1>

A PVA water-soluble film was produced in substantially the same manner as in Example 1, except that the PVA resin aqueous solution was not subjected to the pressure and heat treatment.

### <Comparative Example 2>

A PVA water-soluble film was produced in substantially the same manner as in Example 1, except that the period for the pressure and heat treatment was changed to 30 minutes.

The PVA water-soluble films of Examples and Comparative Examples thus produced were evaluated for characteristic properties based on the following criteria. The results are shown below in Table 1.

### [Measurement of Number of Dark Defects]

A test piece having a size of 25 cm (length) × 13 cm (width) was cut out of each of the PVA water-soluble films, and a 5 cm × 5 cm square frame was marked on a center portion of the test piece with an oil-based maker pen (having a line width of 0.5 mm). Then, the test piece was clamped with the chucks spaced 11 cm from each other longitudinally of the test piece in a stretching machine, and was uniaxially stretched at a longitudinal stretching rate of 3 mm/second to a stretch ratio of 1.2 at a temperature of 23°C at a humidity of 50%RH.

Subsequently, the uniaxially stretched test piece of the PVA water-soluble film was placed between two polarizer plates disposed in crossed Nicols relation in a strain tester TRIBOGEAR TYPE:25W (available from Shinto Scientific Co., Ltd.) and, in this state, the crossed Nicols observation was performed with a backlight turned on. Then, dark defects observed in the marked square frame were each circumscribed with a circle by using the oil-based marker pen (having a line width of 0.5 mm). The diameter of the circle was measured by means of a caliper for determination of whether or not the diameter fell within a range of 1 to 5 mm. Then, the number of dark defects each having a diameter of 1 to 5 mm in the 5 cm × 5 cm area was determined.

### [Transparency of Water-Soluble Film]

The PVA water-soluble films were each analyzed in conformity with JIS K7136 by means of a haze meter NDH4000 (available from Nippon Denshoku Industries Co., Ltd.) An ordinary surface state of the film was analyzed for determination of a total haze (Ht), and a surface state of the film after paraffin oil was applied on front and back surfaces of the film was analyzed for determination of an internal haze (Hi).

**Table 1**

| | Example 1 | Example 2 | Comparative Example 1 | Comparative Example 2 |
|---|---|---|---|---|
| Number of dark defects | 5 | 0 | 95 | 90 |

| Transparency of water-soluble film | | | | |
|---|---|---|---|---|
| Ht (%) | 29 | 22 | 38 | 38 |
| Hi (%) | 20 | 13 | 31 | 30 |

The results shown in Table 1 indicate that the water-soluble films of Examples 1 and 2 each had less than 50 dark defects, and a lower total haze (Ht) and a lower internal haze (Hi). Further, the water-soluble film of Example 2 in which the number of dark defects was reduced had still lower total haze (Ht) and a still lower internal haze (Hi), indicating that the transparency of the film was improved.

In contrast, the water-soluble films of Comparative Examples 1 and 2 each had more than 50 dark defects, and a higher total haze (Ht) and a higher internal haze (Hi) than the water-soluble films of Examples 1 and 2, indicating that the film transparency was poorer.

The above results indicate that chemical agent packages (for example, each containing a liquid detergent) produced by using the water-soluble films of Examples 1 and 2 are excellent in appearance because the films are highly transparent.

While specific forms of the embodiments of the present disclosure have been shown in the aforementioned examples, the examples are merely illustrative but not limitative. It is contemplated that various modifications apparent to those skilled in the art could be made within the scope of the disclosure.

The water-soluble film of the present disclosure is highly transparent and excellent in appearance and, therefore, can be used for various packaging applications. Particularly, the water-soluble film of the present disclosure is useful for unit packages for packaging a chemical agent such as liquid detergent.

## Claims

1. A water-soluble film which comprises a polyvinyl alcohol resin (A) as a major component, and has not more than 50 dark defects each having a diameter of 1 to 5 mm per a 5 cm × 5 cm area thereof as observed under crossed Nicols after being uniaxially stretched under the following conditions (α):
(α) a test piece cut out of the water-soluble film to a size having a length of 25 cm and a width of 13 cm is clamped with chucks spaced 11 cm from each other longitudinally of the test piece in a stretching machine, and is uniaxially stretched at a stretching rate of 3 mm/second to a stretch ratio of 1.2 at a temperature of 23°C at a humidity of 50%RH.

2. The water-soluble film according to claim 1, further comprising 5 to 100 parts by weight of a plasticizer (B) based on 100 parts by weight of the polyvinyl alcohol resin (A).

3. The water-soluble film according to claim 2, wherein the plasticizer (B) comprises at least one selected from the group consisting of glycerin and sorbitol.

4. The water-soluble film according to any one of claims 1 to 3, further comprising 0.01 to 3 parts by weight of a surfactant (C) based on 100 parts by weight of the polyvinyl alcohol resin (A).

5. The water-soluble film according to claim 4, wherein the surfactant (C) comprises a surfactant having a polyoxyalkylene structure.

6. The water-soluble film according to any one of claims 1 to 5, which is a water-soluble film for packaging a chemical agent.

7. A method of producing the water-soluble film according to any one of claims 1 to 6, the method comprising:
preparing a polyvinyl alcohol resin aqueous solution;
subjecting the polyvinyl alcohol resin aqueous solution to a pressure and heat treatment at a pressure of 0.10 to 1.0 MPa, a temperature of at least 130°C, and a humidity of at least 90%RH, for a period of at least 1 hour; and
casting and drying the polyvinyl alcohol resin aqueous solution subjected to the pressure and heat treatment.

8. A chemical agent package, comprising:
a package bag formed from the water-soluble film according to any one of claims 1 to 6; and
a chemical agent packaged in the package bag.

9. The chemical agent package according to claim 8, wherein the chemical agent is a detergent.

10. The chemical agent package according to claim 8 or 9, wherein the detergent is a liquid detergent.
